# FASCICULE DE BREVET EUROPEEN

(11) **EP 3 390 073 B1**
(45) Date de publication et mention de la délivrance du brevet: **15.04.2020**
(21) Numéro de dépôt: 16820000.4
(22) Date de dépôt: 08.12.2016
(51) Int. Cl.: B60C 1/00, C08L 9/06, C08L 53/02, C08K 5/14

(54) **PNEUMATIQUE POURVU D'UNE BANDE DE ROULEMENT COMPRENANT UN ELASTOMERE DIENIQUE, UN ELASTOMERE THERMOPLASTIQUE ET UN PEROXYDE**
REIFEN MIT LAUFFLÄCHE AUS EINEM DIENELASTOMER, EINEM THERMOPLASTISCHEN ELASTOMER UND EINEM PEROXID
TYRE PROVIDED WITH A TREAD COMPRISING A DIENE ELASTOMER, A THERMOPLASTIC ELASTOMER AND A PEROXIDE

(30) Priorité: 18.12.2015 FR 1562827
(43) Date de publication de la demande: 24.10.2018
(73) Titulaire: Compagnie Générale des Etablissements Michelin, 63000 Clermont-Ferrand (FR)
(72) Inventeur: GORNARD, Benjamin, 63040 Clermont-Ferrand Cedex 9 (FR)
(74) Mandataire: Wroblewski, Nicolas Paul André
(86) Numéro de dépôt international: PCT/FR2016/053284
(87) Numéro de publication internationale: WO 2017/103387

(56) Documents cités:
- WO-A1-2015/091922
- FR-A1- 2 943 065
- US-A1- 2005 288 441
- J.R. White ET AL: "Rubber Technologist's Handbook", , 1 January 2001 (2001-01-01), pages 1-599, XP055627107, ISBN: 978-1-85957-262-7 Retrieved from the Internet: URL:https://www.asminternational.org/home/ -/journal_content/56/10192/74477G/PUBLICAT ION [retrieved on 2019-09-30]

## Description

La présente invention est relative aux pneumatiques munis d'une bande de roulement.

Dans un pneumatique conventionnel, la bande de roulement comprend à titre d'élastomère, des élastomères diéniques. Ce type de bande de roulement est bien connu et décrit dans de nombreux documents.

Dans quelques documents, il a été décrit des bandes de roulement comprenant un mélange d'élastomère diénique et d'élastomère thermoplastique. Par exemple, le document WO 2010/105984 décrit des compositions de bande de roulement comprenant un copolymère styrène-butadiène (SBR), un polybutadiène (BR) et un élastomère thermoplastique styrénique (TPS) insaturé ainsi qu'une charge renforçante pour améliorer la résistance à l'usure des pneumatiques. Cette composition est de manière tout à fait conventionnelle réticulée au soufre.

Egalement, les demanderesses ont décrit précédemment dans les documents WO 2012/152686 et WO 2015/113966 un pneumatique muni d'une bande de roulement comprenant au moins un élastomère thermoplastique, ledit élastomère thermoplastique étant un copolymère bloc comprenant au moins un bloc élastomère et au moins un bloc thermoplastique, et le taux total d'élastomère thermoplastique étant compris dans un domaine variant de 65 à 100 pce (parties en poids pour cent parties d'élastomère). En particulier, les demanderesses ont décrit une bande de roulement comprenant comme élastomère thermoplastique le copolymère tribloc styrène/isoprène/styrène (SIS) ou un copolymère tribloc styrène/copolymère statistique butadiène-styrène hydrogéné/styrène (SOE) comme permettant une diminution de la résistance au roulement par rapport aux bandes de roulement de composition classique.

Un objectif constant des manufacturiers de pneumatique demeure d'améliorer un équilibre de performances difficiles à concilier, telles que la résistance au roulement des pneumatiques et leur adhérence sur sol mouillé ou la facilité de mise en œuvre (processabilité) et la tenue en température des compositions. En effet, l'amélioration de l'adhérence suppose d'augmenter les pertes hystérétiques tandis que l'amélioration de la résistance au roulement suppose de baisser les pertes hystérétiques. Egalement, une faible rigidité à haute température est recherchée pour la facilité de mise en œuvre tandis qu'il est également important d'avoir des compositions présentant une bonne tenue à haute température lors de l'utilisation des pneumatiques.

Par conséquent, il existe un besoin permanent d'améliorer toutes ces performances, souvent difficiles à rassembler dans une même composition.

A présent, les demanderesses ont trouvé de manière surprenante qu'un pneumatique dont au moins la bande de roulement comprend une composition à base d'une matrice élastomérique spécifique et d'un système de réticulation à base de peroxyde permettait de concilier les performances essentielles que sont une faible résistance au roulement, une bonne résistance à l'usure et une bonne tenue en température.

L'invention a donc pour objet un pneumatique dont au moins la bande de roulement comprend une composition à base d'au moins un élastomère diénique, à un taux compris entre 35 et 99 pce (parties en poids pour cent parties d'élastomère), un élastomère thermoplastique de type copolymère à bloc élastomère et à bloc thermoplastique, à un taux compris entre 1 et 65 pce, et un système de réticulation à base de peroxyde organique.

Le pneumatique selon l'invention telle que définie ci-dessus comprend préférentiellement un sommet avec une armature de sommet, deux flancs, deux bourrelets, une armature de carcasse ancrée aux deux bourrelets et s'étendant d'un flanc à l'autre, en plus de la bande de roulement telle que définie plus haut, tous les modes de réalisations préférentiels relatifs à la composition de cette bande de roulement s'appliquant *mutatis mutandis.*

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, élastomères thermoplastiques et élastomères non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Enfin, lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### 1. Composition de la bande de roulement

Le pneumatique selon l'invention a pour caractéristique essentielle de comprendre dont au moins la bande de roulement comprend une composition à base d'au moins un élastomère diénique, à un taux compris entre 35 et 99 pce (parties en poids pour cent parties d'élastomère), un élastomère thermoplastique de type copolymère à bloc élastomère et à bloc thermoplastique, à un taux compris entre 1 et 65 pce, et un système de réticulation à base de peroxyde organique.

### 1.1 Elastomère thermoplastique (TPE)

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique peut être préférentiellement un TPE spécifique, copolymère bloc comprenant au moins un bloc élastomère de type polyéther et au moins un bloc thermoplastique de type non styrénique (TPNS). Cet élastomère est aussi noté TPE à blocs polyéther et TPNS dans la suite de la demande, Dans ce qui suit, lorsqu'il est fait référence à un bloc polyéther, il s'agit donc d'un bloc élastomérique majoritairement (c'est-à-dire à plus de 50% en poids, de préférence à plus de 80 % en poids) composé d'un polymère issu de la polymérisation de monomère de type éther, et, lorsqu'il est fait référence à un bloc non styrénique, il s'agit d'un bloc composé majoritairement (c'est-à-dire à plus de 50% en poids, de préférence à plus de 80 % en poids) d'un polymère issu de la polymérisation de monomère autre que les composés styréniques (c'est à dire le styrène et les styrènes substitués et/ou fonctionnalisés).

Egalement et préférentiellement, ledit élastomère thermoplastique peut être un autre TPE spécifique, copolymère bloc comprenant au moins un bloc élastomère de type copolymère statistique butadiène-styrène éventuellement hydrogéné (H)SBR et au moins un bloc thermoplastique de type copolymère styrénique (PS). Dans ce qui suit, lorsqu'il est fait référence à un bloc (H)SBR, il s'agit donc d'un bloc élastomérique majoritairement (c'est-à-dire à plus de 50% en poids, de préférence à plus de 80 % en poids) composé d'un copolymère statistique de butadiène et de styrène, ce copolymère pouvant ou non être hydrogéné, et, lorsqu'il est fait référence à un bloc styrénique, il s'agit d'un bloc composé majoritairement (c'est-à-dire à plus de 50% en poids, de préférence à plus de 80 % en poids) d'un polymère styrénique tel qu'un polystyrène.

Ainsi, de préférence pour les besoins de l'invention, l'élastomère thermoplastique est choisi dans le groupe constitué par les copolymères à blocs comprenant au moins un bloc élastomère de type polyéther et au moins un bloc thermoplastique de type non styrénique, les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques. Plus préférentiellement, l'élastomère thermoplastique est choisi dans le groupe constitué par les copolymères à blocs comprenant au moins un bloc élastomère de type polyéther et au moins un bloc thermoplastique polyamide (PEBA), les copolymères à blocs comprenant au moins un bloc élastomère de type polyéther et au moins un bloc thermoplastique polyester (COPE), les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques. Plus préférentiellement, l'élastomère thermoplastique est choisi dans le groupe constitué par les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques.

Les TPE et en particulier les TPE préférentiels, sont décrits plus en détail dans ce qui suit.

### 1.1.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. Ainsi, on a constaté qu'une valeur comprise dans un domaine de 50 000 à 300 000 g/mol et mieux, de 60 000 à 150 000 était particulièrement bien adaptée, notamment à une utilisation du TPE dans une composition pour bande de roulement de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

De manière connue, les TPE présentent deux pics de température de transition vitreuse (Tg, mesurée selon ASTM D3418), la température la plus basse étant relative à la partie élastomère (par exemple polyéther ou (H)SBR) du TPE à blocs, et la température la plus haute étant relative à la partie thermoplastique (par exemple non styrénique ou polystyrène) du TPE. Ainsi, les blocs souples des TPE se définissent par une Tg inférieure à la température ambiante (25°C), tandis que les blocs rigides ont une Tg supérieure à 80°C.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE est plus préférentiellement encore inférieure ou égale à -10°C. De manière préférentielle également, la Tg du TPE est supérieure à -100°C.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène/styrène pour un copolymère blocs styrène/ (H)SBR/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères- blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### 1.1.2. Nature des blocs élastomères

Les blocs élastomères du TPE pour les besoins de l'invention, peuvent être tous les élastomères connus de l'homme de l'art.

La fraction de bloc élastomère dans le TPE est comprise dans un domaine allant de 30 à 95 %, préférentiellement de 40 à 92 %, plus préférentiellement de 50 à 90%.

Ces blocs élastomères possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs élastomères est supérieure à -100°C. Conviennent notamment, les blocs ayant une Tg comprise entre 20°C et -70°C et plus particulièrement entre 0°C et -50°C.

De préférence, les blocs élastomères du TPE présentent au total, une masse moléculaire moyenne en nombre ("Mn") allant de 25 000 g/mol à 350 OOOg/mol, de préférence de 35 000 g/mol à 250 000 g/mol de manière à conférer au TPE de bonnes propriétés élastomériques et une tenue mécanique suffisante et compatible avec l'utilisation en bande de roulement de pneumatique.

Selon un premier mode de réalisation préféré, le bloc élastomère est de type copolymère statistique de butadiène et de styrène ((H)SBR). De manière bien connue, le bloc (H)SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée.

De manière préférentielle, on utilise notamment un bloc (H)SBR ayant une teneur en styrène comprise, par exemple dans un domaine allant de 10 à 60% en poids, de préférence de 20% à 50% en poids, et pour la partie butadiénique, une teneur en liaisons - 1,2 comprise dans un domaine allant de 4% à 75% (% molaire), et une teneur en liaisons - 1,4 comprise dans un domaine allant de 20% à 96% (% molaire).

La détermination du taux d'hydrogénation est réalisée par une analyse RMN. Les spectres sont acquis sur un spectromètre Avance 500 MHz BRUKER équipé d'une Cryosonde ¹H-X 5 mm. L'expérience RMN ¹H quantitative, utilise une séquence simple impulsion 30° et un délai de répétition de 5 secondes entre chaque acquisition. 64 accumulations sont réalisées. Les échantillons (environ 25mg) sont solubilisés dans le CS₂ environ 1mL, 100µl de cyclohexane deutéré sont ajouté pour faire le lock pendant l'acquisition. Les déplacements chimiques sont calibrés par rapport à l'impureté protonée du CS₂ δppm ¹H à 7.18 ppm référencé sur le TMS (δppm ¹H à 0ppm). Le spectre RMN 1H permet de quantifier la microstructure par intégration des massifs de signaux caractéristiques des différents motifs :
- Le styrène provenant du (H)SBR et des blocs polystyrène. Il est quantifiable dans la zone des aromatiques entre 6,0ppm et 7,3ppm pour 5 protons (en retirant l'intégrale du signal de l'impureté du CS2 à 7,18ppm).
- Le PB1-2 provenant du (H)SBR. Il est quantifiable dans la zone des éthyléniques entre 4,6ppm et 5,1ppm pour 2 protons.
- Le PB1-4 provenant du (H)SBR. Il est quantifiable dans la zone des éthyléniques entre 5,1ppm et 6,1ppm pour 2 protons et en supprimant 1 proton du motif PB 1-2.
- Le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8ppm pour 3 protons.
- Le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif =Intégrale 1H d'un motif/ Σ(intégrales 1H de chaque motif). Par exemple pour un motif de styrène : %molaire du styrène = (Intégrale 1H du styrène) / (Intégrale ¹H du styrène+ Intégrale ¹H du PB1-2 + Intégrale ¹H du PB1-4 + Intégrale ¹H du PB1-2 hydrogéné + Intégrale ¹H du PB1-4 hydrogéné).

Selon le taux d'hydrogénation du bloc (H)SBR, la teneur en double liaison de la partie butadiénique du bloc (H)SBR peut diminuer jusqu'à une teneur de 0% molaire pour un bloc (H)SBR totalement hydrogéné. De préférence, dans les TPE à blocs (H)SBR et PS utiles aux besoins de l'invention, le bloc élastomère (H)SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100% molaire des doubles liaisons dans la portion butadiène sont hydrogénées.

La partie styrénique des blocs (H)SBR peut être composée par des monomères choisis parmi les monomères styréniques, et notamment choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et les 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et les 2,4,6-trifluorostyrène), le para-hydroxy-styrène, et les mélanges de ces derniers.

Selon un deuxième mode de réalisation préféré, les blocs élastomères peuvent être de type polyéther, en particulier un polyéther peut être composé par des monomères choisis parmi les alcools ou éther cycliques, préférentiellement les alcools ou éthers cycliques aliphatiques, tels que par exemple l'éthanol ou le tétrahydrofurane. Parmi les polyéthers, on choisira préférentiellement ceux choisis dans le groupe constitué par les polytétraméthylène glycol (PTMG), les polyéthylènes glycols (PEG), polypropylène éther glycol (PPG), le polyhexaméthylène éther glycol, le polytriméthylenether glycol (PO3G), le poly(3-alkyltétrahydrofurane), et leurs mélanges. Très préférentiellement, le polyéther est choisi dans le groupe constitué par les polytétraméthylène glycol (PTMG), les polyéthylènes glycols (PEG) et leurs mélanges.

Le bloc élastomère peut également être constitué de plusieurs blocs élastomères tels que définis ci-dessus.

### 1.1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en œuvre industrielle (transformation). Dans le cas d'un polymère (ou d'un bloc de polymère) amorphe, la température de mise en œuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en œuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise œuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La fraction de bloc thermoplastique dans le TPE est comprise dans un domaine allant de 5 à 70 %, préférentiellement de 8 à 60 %, plus préférentiellement de 10 à 50%.

De préférence selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en bande de roulement de pneumatique.

Selon un premier mode de réalisation préféré, les blocs thermoplastiques du TPE, notamment les (H)SBR-PS, sont constitué(s) à partir de monomères styréniques polymérisés (PS). Les polystyrènes (PS) préférentiels sont obtenus à partir de monomères styréniques choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et le 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et le 2,4,6-trifluorostyrène), le para-hydroxy-styrène, et les mélanges de ces derniers.

De manière très préférentielle, les blocs PS sont des blocs obtenus à partir de polystyrène non substitué.

Selon une variante de l'invention, le bloc polystyrène tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Certains TPE particuliers, à bloc élastomère de type copolymère statistique butadiène-styrène éventuellement hydrogéné et à un bloc thermoplastique de type styrénique (TPE (H)SBR-PS), sont également parfois notés SOE, et ils sont les plus préférés pour les besoins de l'invention.

Selon un deuxième mode de réalisation, également préféré, les blocs thermoplastiques du TPE sont constitué(s) à partir de monomères non styréniques polymérisés (TPNS). Les blocs thermoplastiques non styréniques (TPNS) sont des blocs non styréniques, c'est-à-dire de préférence des thermoplastiques issus de la polymérisation de tout monomère approprié et ne comprenant pas de monomères styréniques ou moins de 5%.

De manière préférentielle, les blocs TPNS sont des blocs choisis parmi les blocs polyamides, polyesters, et leurs mélanges. De manière très préférentielle, les blocs TPNS sont des blocs polyamides et/ou polyesters. Très préférentiellement, les blocs TPNS sont choisis dans le groupe constitué par les polyamides de type PA6, PA11 ou PA12, ou les polyesters de type PET ou PBT et les mélanges de ces derniers.

Les TPE particuliers, à blocs polyéther et TPNS particuliers dans lesquels les blocs thermoplastiques non styréniques sont des polyamides sont usuellement notés TPE-A ou TPA (copolyamide thermoplastique) ou encore PEBA (copolyéther bloc amide), et ils sont particulièrement préférés pour les besoins de l'invention.

Les TPE particuliers, à blocs polyéther et TPNS particuliers dans lesquels les blocs thermoplastiques non styréniques sont des polyesters sont usuellement notés TPE-E ou TPC (copolyester thermoplastique) ou encore COPE (copolymère bloc éther-ester), et ils sont également particulièrement préférés pour les besoins de l'invention.

Le bloc thermoplastique peut également être constitué de plusieurs blocs thermoplastiques tels que définis ci-dessus.

### 1.1.4. Exemples de TPE

A titre d'exemples d'élastomères TPE à blocs (H)SBR et PS commercialement disponibles, on peut citer les élastomères de type SOE, commercialisés par la société Asahi Kasei sous la dénomination « SOE S1611 », « SOE L605 », « SOE S1606 » ou encore « SOE L606 ».

A titre d'exemples d'élastomères TPE à blocs polyéther et TPNS commercialement disponibles, on peut citer les élastomères PEBA de type « PEBAX », commercialisés par la société Arkema, par exemple sous la dénomination « PEBAX 4033 », « PEBAX 6333 » ou encore les élastomères COPE de type « Pelprene P », commercialisés par la société Toyobo, par exemple sous la dénomination « Pelprene P40B ».

### 1.1.5. Quantité de TPE

Dans la composition de bande de roulement du pneumatique de l'invention, l'élastomère TPE (c'est à dire le ou les élastomères TPE) représente entre 1 et 65%, de préférence de 10 à 60% en poids, plus préférentiellement de 20 à 50% et très préférentiellement de 30 à 45% en poids de l'ensemble des élastomères présents dans la composition élastomère.

Ainsi, la quantité d'élastomère TPE est comprise dans un domaine qui varie entre 1 et 65 pce, préférentiellement de 10 à 60 pce, mieux de 20 à 50 pce et notamment de 30 à 45 pce. En effet, avec une quantité d'élastomère TPE inférieure à 1 pce l'effet sur la diminution de la résistance au roulement est peu notable tandis qu'au-delà de 65 pce d'élastomère TPE, la composition prend une nature thermoplastique avec pour conséquence une très forte évolution des propriétés avec la température.

### 1.2 Elastomère Diénique

La composition de la bande de roulement selon l'invention, comporte au moins un (c'est-à-dire un ou plusieurs) caoutchouc diénique. Le taux total d'élastomère diénique est compris entre 35 et 99 pce, de préférence dans un domaine variant de 40 à 90 pce, préférentiellement de 50 à 80 pce, plus préférentiellement de 55 à 70 pce.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la bande de roulement du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

De préférence pour les besoins de l'invention, l'élastomère diénique est choisi dans le groupe constitué par les élastomères diéniques essentiellement insaturés, et les mélanges de ces élastomères. Plus préférentiellement, l'élastomère diénique est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Encore plus préférentiellement, l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. De manière très préférée, l'élastomère diénique est choisi dans le groupe constitué par les polybutadiènes (BR), les copolymères butadiène-styrène (SBR), et leurs mélanges. En particulier, l'élastomère diénique est tout préférentiellement un copolymère butadiène-styrène ou un mélange de copolymères butadiène-styrène.

### 1.3. Système de réticulation à base de peroxyde organique

La composition caractéristique du pneumatique selon l'invention a pour caractéristique essentielle de comprendre un système de réticulation à base de peroxyde organique, qui peut être tout peroxyde organique connu de l'homme de l'art.

Parmi les peroxydes organiques, bien connus de l'homme de l'art, il est préférable d'utiliser pour l'invention un peroxyde organique choisi parmi le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et les mélanges de ces derniers.

Les peroxydes organiques peuvent être choisis dans le groupe des peroxydes suivants : bis (2,4-di-chlorobenzoyl) peroxide ou DCBP-50 (« Perkadox PD-50S-ps-a » de la société AKZO Nobel Chemical B.V. ou « Luperox CST » de la société ARKEMA), benzoyl peroxide ou BP-50 (« Perkadox L-50S-ps » de la société AKZO Nobel Chemical B.V.), dicumyl peroxide (« Di-Cup 40C » de la société Geo Specialty Chemicals, Inc. ou « Varox DCP-40C » de la société R.T. Vanderbilt Company, Inc. ou le « Dicup » de la société Hercules Powder Co.), 2,5-dimethyl-2,5-di(t-butylperoxy)hexane ou DBPH (« Varox DBPH-50 » de la société R.T. Vanderbilt Company, Inc. ou « Luperox 101 » de la société ARKEMA ou « Trigonox 101 » de la société AKZO Nobel Chemical B.V.), di-tert-butyl peroxide ou DTBP (« Luperox DI » de la société ARKEMA).

Préférentiellement, la quantité de peroxyde organique à utiliser pour les besoins de l'invention est inférieure ou égale à 10 pce. De préférence, la quantité de peroxyde organique dans la composition est comprise dans un domaine allant de 0,1 à 10 pce. En effet, en dessous d'une quantité de 0,1 pce, l'effet du peroxyde n'est pas notable tandis qu'au-delà de 10 pce, les propriétés d'allongement rupture et donc de résistance de la composition sont diminuées. Plus préférentiellement, la quantité de peroxyde dans la composition est comprise dans un domaine allant de 0,2 à 6 pce, de préférence de 0,5 à 5 pce.

### 1.4. Charge nanométrique ou renforçante

Les élastomères et le système de réticulation à base de peroxyde décrits précédemment sont suffisants à eux seuls pour que soit utilisable la bande de roulement selon l'invention. De manière préférentielle, la composition selon l'invention peut comprendre en outre une charge renforçante.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice. Préférentiellement pour les besoins de l'invention, la charge renforçante majoritaire pourra être de la silice, ou alternativement du noir de carbone.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

De préférence pour l'invention la charge renforçante est du noir de carbone et/ou de la silice. Selon un mode de réalisation préféré, la charge renforçante majoritaire est du noir de carbone. Selon un autre mode de réalisation, encore plus préféré, la charge renforçante majoritaire est de la silice.

Le taux volumique de charge renforçante, optionnelle, dans la composition (noir de carbone et/ou charge inorganique renforçante telle que silice) est compris dans un domaine de 0 à 30%, ce qui correspond à un taux de 0 à 100 pce pour une composition sans plastifiant. Préférentiellement la composition comprend moins de 20% et de préférence moins de 15% pce de charge renforçante (notamment entre 5 et 15%).

Exprimé en pce, le taux de charge est préférentiellement de préférence moins de 100 pce, notamment moins de 60 pce, plus préférentiellement un taux compris dans un domaine allant de 3 à 50 pce, mieux de 5 à 40 pce.

### 1.5. Additifs divers

Les élastomères et le système de réticulation à base de peroxyde décrits précédemment sont suffisants à eux seuls pour que soit utilisable la bande de roulement du pneumatique selon l'invention.

Ainsi, selon un mode de réalisation préférentiel de l'invention, la composition élastomère précédemment décrite ne comporte pas d'agent plastifiant de type huile ou résine thermoplastique, ou, si elle en comporte, elle en comporte moins de 20 pce (notamment entre 0,5 et 20 pce), de préférence moins de 15 pce (notamment entre 0,5 et 15 pce), plus préférentiellement moins de 10 pce (notamment entre 0,5 et 10 pce), mieux, moins de 5 pce (notamment entre 0,5 et 5 pce). De manière préférentielle également la composition ne comprend pas d'agent plastifiant. De manière connue de l'homme du métier, on appelle agent plastifiant une huile (ou huile plastifiante ou huile d'extension) ou une résine plastifiante dont la fonction est de faciliter la mise en œuvre de la bande de roulement, particulièrement son intégration au pneumatique par un abaissement du module et une augmentation du pouvoir tackifiant.

Lorsque la composition comprend un plastifiant, on peut utiliser toute huile, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier. L'homme du métier saura, à la lumière de la description et des exemples de réalisation qui suivent, ajuster la quantité de plastifiant, notamment en fonction de l'élastomère TPE, des conditions particulières d'usage du pneumatique muni de la bande de roulement, et notamment en fonction du type de pneumatique dans lequel elle est destinée à être utilisée.

Egalement, la composition élastomère précédemment décrite peut comporter, les divers additifs usuellement présents dans les bandes de roulements connues de l'homme du métier. On choisira par exemple un ou plusieurs additifs choisis parmi les agents de protection tels que antioxydants ou antiozonants, anti-UV, les divers agents de mise en œuvre ou autres stabilisants, ou encore les promoteurs aptes à favoriser l'adhésion au reste de la structure de l'objet pneumatique

Selon un mode de réalisation particulier, la composition selon l'invention peut optionnellement comprendre une résine thermoplastique à base de motifs polyphénylène éther éventuellement substitués (en abrégé « résine PPE »). Ce type de composé est décrit par exemple dans l'encyclopédie « Ullmann's encyclopédia of industrial chemistry » éditée par VCH, vol A 21, pages 605-614, 5e édition,1992.

La résine PPE optionnelle pour l'invention présente préférentiellement une température de transition vitreuse (Tg), mesurée par DSC selon la norme ASTM D3418 de 1999 comprise dans un domaine allant de 0 à 280°C, de préférence de 5 à 250°C et plus préférentiellement de 5 à 220°C. En dessous de 0°C, la résine PPE ne permet pas un décalage de Tg suffisant dans la composition la comprenant et au-dessus de 280°C, on peut rencontrer des problèmes de fabrication notamment pour obtenir un mélange homogène.

De préférence, la résine PPE est un composé comprenant majoritairement des motifs polyphénylène de formule générale (I) : 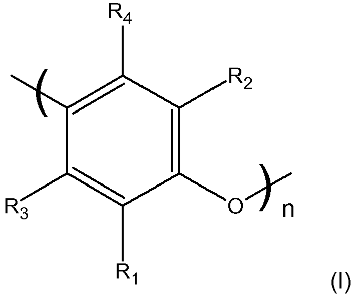 dans laquelle :
- R1, R2, R3 et R4 représentent indépendamment les uns des autres des groupements identiques ou différents choisis parmi l'hydrogène ; les groupements hydroxy, alkoxy, halogène, amino, alkylamino, dialkylamino ; les groupements hydrocarbonés comportant au moins 2 atomes de carbone, éventuellement interrompus par des hétéroatomes et éventuellement substitués ; R1 et R3 d'une part et R2 et R4 d'autre part peuvent former ensemble avec les atomes de carbones auxquels ils se rattachent un ou plusieurs cycles accolés au cycle benzénique du composé de formule (I)
- n est un entier compris dans un domaine allant de 3 à 300.

Préférentiellement, R1, R2, R3 et R4 représentent indépendamment les uns des autres des groupements identiques ou différents choisis parmi :
- l'hydrogène
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène.

Plus préférentiellement, R1, R2, R3 et R4 représentent indépendamment les uns des autres des groupements identiques ou différents choisis parmi :
- l'hydrogène
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone (de préférence de 2 à 6), éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène,
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

Encore plus préférentiellement, R1 et R2 représentent un groupement alkyle et en particulier un groupe méthyle ; et R3 et R4 représentent des atomes d'hydrogène. Dans ce cas, la résine PPE est un poly(2,6-diméthyl-1,4-phénylène éther).

De manière préférentielle également, n est un entier compris dans un domaine allant de 3 à 50, plus préférentiellement de 5 à 30, de préférence de 6 à 20.

De préférence, la résine PPE est un composé comprenant à plus de 80% en poids, et plus préférentiellement encore à plus de 95% en poids, des motifs polyphénylène de formule générale (I).

A titre d'exemples, on peut citer le poly(2,6-diméthyl-1,4-phénylène éther) et notamment le « Noryl SA 120 » de la socité Sabic ou le « Xyron S202 » de la société Asahi Kasei.

De manière connue, les résines PPE ont des masses moléculaires moyennes en nombre (Mn) variables notamment d'environ 1000 à 45000 g/mol, le plus souvent de 15000 à 45000 g/mol, la Mn étant mesurée de manière connue de l'homme de l'art par SEC (encore nommée GPC, comme dans la référence US4588806, colonne 8). Pour les besoins de l'invention on préfère pour la composition de l'invention une résine PPE possédant une masse Mn comprise dans un domaine variant de 10000 à 45000 g/mol, préférentiellement de 15000 à 40000 g/mol, et plus préférentiellement de 25000 à 40000 g/mol.

Préférentiellement, la valeur de l'indice de polydispersité Ip (rappel : Ip = Mw/Mn avec Mw masse moléculaire moyenne en poids et Mn masse moléculaire moyenne en nombre) de la résine PPE est inférieure ou égale à 5, plus préférentiellement inférieure ou égale à 3 et plus préférentiellement encore inférieure ou égale à 2.

Lorsque la composition en contient, le taux de résine PPE dans la composition est préférentiellement compris dans un domaine allant de 1 à 50 pce, plus préférentiellement de 2 à 40 pce, plus préférentiellement encore de 2 à 30 pce et très préférentiellement de 2 à 20 pce.

Même lorsqu'elle contient une résine PPE telle que définie ci-dessus, la composition de la bande de roulement ne comprend préférentiellement pas de système plastifiant autre que la résine PPE, ou en comprend avec un taux total de plastifiant inférieur à 20 pce, de préférence inférieur à 15 pce.

### 2. Préparation

Les compositions de bande de roulement pour le pneumatique selon l'invention sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation à base de peroxyde; de telles phases ont été décrites par exemple dans les demandes EP-A-0501227, EP-A-0735088, EP-A-0810258, WO00/05300 ou WO00/05301, pour des système de vulcanisation au soufre. Les élastomères TPE et diéniques sont introduits lors de la première étape, directement sous leur forme commerciale, par exemple sous la forme de billes ou de granulés. Une alternative préférentielle peut être de préparer un mélange maître (masterbatch) comprenant les élastomères uniquement et éventuellement d'autres ingrédients optionnels, à l'exception du système de réticulation, ce mélange maître étant ensuite utilisé pour la préparation du mélange complet. De manière connue, ce mélange maître peut être préparé dans une extrudeuse bi-vis, à une température comprise entre 180°C et 280°C, par exemple à 230°C.

La bande de roulement pour le pneumatique selon l'invention est ensuite extrudée de façon classique, afin de réaliser le profilé. La bande de roulement est ensuite sculptée dans le moule de cuisson du pneumatique.

Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet.

### EXEMPLES DE RÉALISATION DE L'INVENTION

Des compositions de bande de roulement pour pneumatique selon l'invention ont été préparées comme indiqué précédemment.

### Tests effectués au laboratoire sur les compositions

### - Propriétés dynamiques

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, selon la norme ASTM D 1349 - 99, à 40°C. On effectue un balayage en amplitude de déformation crête à crête de 0,1 à 100%, (cycle aller), puis de 100% à 1 % (cycle retour), à 10 Hz. Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 100% de déformation (effet Payne).

L'hystérèse est représentée par le tan(δ)max retour. Plus la valeur est basse, plus la composition aura une hystérèse faible et donc une résistance au roulement faible. Pour plus de lisibilité les résultats seront indiqués selon la performance, en base 100, la valeur 100 étant attribuée au témoin. Un résultat inférieur à 100 indiquant une diminution de la performance de résistance au roulement (augmentation de la valeur de tan(δ) max à 40°C), et inversement, un résultat supérieur à 100, indiquera une augmentation de la performance (diminution de la valeur de tan(δ)max à 40°C).

### - Résistance à l'abrasion ou résistance à l'usure

L'expérience d'abrasion peut par exemple être conduite sur un abrasimètre LAT100, dispositif connu de l'homme de l'art, dont le résultat est une perte de masse par km. L'éprouvette cylindrique est conforme à la pratique usuelle. Elle est appliquée avec une charge fixe de par exemple 75N contre une piste circulaire. Cette éprouvette cylindrique est soumise à une dérive de 16 degrés ou 13 ou 9, mais on lui préfèrera une dérive de 5,5 degrés. La vitesse de rotation du disque abrasif est de 40, 25km/h mais on lui préfèrera une valeur de 12km/h.

Pour plus de lisibilité les résultats seront indiqués selon la performance, en base 100, la valeur 100 étant attribuée au témoin. Un résultat inférieur à 100 indiquant une diminution de la résistance à l'abrasion, et inversement, un résultat supérieur à 100, indiquera une augmentation de la résistance à l'abrasion et donc à l'usure.

### - Tenue thermique ou tenue en température

La tenue thermique est représentée par le ratio de module à 190°C et 40°C obtenue sur la courbe G* = f(T) obtenue par une éprouvette de mesure dynamique en cisaillement connu de l'homme de l'art sur un viscoanalyseur (Metravib VA4000) selon une expérience de mesure de propriétés dynamique similaire à celle décrite plus haut, avec un balayage en température, à 10Hz, sous une contrainte de 0,7 MPa.

Pour plus de lisibilité les résultats seront indiqués selon la performance, en base 100, la valeur 100 étant attribuée au témoin. Un résultat inférieur à 100 indiquant une diminution de la tenue thermique, et inversement, un résultat supérieur à 100, indiquera une augmentation de la tenue thermique.

### Exemples

Une composition de bande de roulement de pneumatique conforme à l'invention (A2) a été préparée comme indiqué précédemment et comparée à deux compositions témoin : une composition de bande de roulement de pneumatique usuelle (A0) et une composition réticulation au peroxyde (A1). Les compositions de ces bandes de roulement sont présentées dans le tableau 1 ci-dessous.

**Tableau 1**

| Composition | A-0 | A-1 | A-2 |
|---|---|---|---|
| BR (1) | 15 | 0 | 0 |
| SBR (2) | 85 | 60 | 60 |
| Elastomère TPE (3) | 0 | 40 | 40 |
| Noir de carbone (4) | 5 | 5 | 5 |
| Silice (5) | 70 | 26 | 26 |
| Agent de couplage (6) | 6 | 2 | 2 |
| Huile (7) | 2 | 0 | 0 |
| Résine (8) | 15 | 0 | 0 |
| Cire anti-ozone | 1,5 | 1,5 | 1,5 |
| Agent anti-oxydant (9) | 2 | 2 | 2 |
| DPG (10) | 1,3 | 0,5 | 0,5 |
| ZnO (11) | 0,5 | 0,5 | 0,5 |
| Acide stéarique (12) | 2 | 2 | 2 |
| CBS (13) | 1,7 | 1,7 | 0 |
| Soufre | 1 | 1 | 0 |
| Peroxyde (14) | 0 | 0 | 5 |

| | | | |
|---|---|---|---|
| (1) BR avec 4% de motif 1,2 et 93% de motif 1,4-cis (Tg = -106°C) ; (2) SSBR solution (taux exprimés en SBR sec : 41% de styrène, 24 % des motifs polybutadiène en 1-2 et 50% des motifs polybutadiène en 1-4 trans (Tg = - 25°C) ; (3) Elastomère thermoplastique SOE « SOE L606 » de la société Asahi Kasei ; (4) Noir de carbone N234 ; (5) Silice (« Zeosil 1165MP » de la société Rhodia) ; (6) agent de couplage TESTP (« Si69 » de la société Degussa) ; (7) Huile MES « Catenex SNR » de la société Shell ; (8) Résine C5/C9 « CrayValley Wingtack » de la société STS ; (9) N-1,3-diméthylbutyl-N-phénylparaphénylènediamine (« Santoflex 6-PPD » de la société Flexsys) ; (10) DPG = Diphénylguanidine (« Perkacit DPG » de la société Flexsys) ; (11) oxyde de zinc (grade industriel - société Umicore) ; (12) stéarine (« Pristerene » de la société Uniquema); (13) N-cyclohexyl-2-benzothiazyl-sulfénamide (« Santocure CBS » de la société Flexsys) ; (14) Peroxyde de dicumyl « Dicup » de la société Hercules Powder Co. | | | |

On peut noter dans ces compositions la possibilité de baisser le taux de charge renforçante et de plastifiant vis-à-vis de la composition témoin, grâce à l'utilisation d'élastomères TPE en coupage avec l'élastomère diénique dans la composition de la bande de roulement.

Les performances de l'invention ont été évaluées au laboratoire, et les résultats sont présentés au tableau 2 ci-dessous.

**Tableau 2**

| Composition | A-0 | A-1 | A-2 |
|---|---|---|---|
| Performance hystérèse (base 100) | 100 | 170 | 247 |
| Performance résistance à l'abrasion (base 100) | 100 | 41 | 90 |
| Performance tenue thermique (base 100) | 100 | 78 | 132 |

Les résultats présentés au tableau 2 mettent en évidence que les compositions selon l'invention permettent de remplacer une partie de l'élastomère diénique par un TPE, et, en présence d'un système de réticulation à base de péroxyde, permettent une amélioration notable de l'équilibre des performances qu'on peut attendre en résistance au roulement et en résistance à l'usure et en tenue thermique. Par ailleurs, il est très surprenant au vu de l'état de la technique, que le TPE en coupage avec un élastomère diénique, permettent de diminuer notablement la quantité de charge et de plastifiant dans la composition de la bande de roulement, permettant ainsi une économie de moyen et une facilité de mise en œuvre.

## Revendications

1. Pneumatique dont au moins la bande de roulement comprend une composition à base d'au moins un élastomère diénique, à un taux compris entre 35 et 99 pce (parties en poids pour cent parties d'élastomère), un élastomère thermoplastique de type copolymère à bloc élastomère et à bloc thermoplastique, à un taux compris entre 1 et 65 pce, et un système de réticulation à base de peroxyde organique.

2. Pneumatique selon la revendication 1, dans lequel la masse moléculaire moyenne en nombre de l'élastomère thermoplastique est comprise entre 30 000 et 500 000 g/mol.

3. Pneumatique selon l'une des revendications précédentes, dans lequel l'élastomère thermoplastique est choisi dans le groupe constitué par les copolymères à blocs comprenant au moins un bloc élastomère de type polyéther et au moins un bloc thermoplastique de type non styrénique, les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques.

4. Pneumatique selon la revendication 3, dans lequel l'élastomère thermoplastique est choisi dans le groupe constitué par les copolymères à blocs comprenant au moins un bloc élastomère de type polyéther et au moins un bloc thermoplastique polyamide (PEBA), les copolymères à blocs comprenant au moins un bloc élastomère de type polyéther et au moins un bloc thermoplastique polyester (COPE), les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques.

5. Pneumatique selon la revendication 3 ou 4, dans lequel le ou les blocs élastomères de type copolymère statistique butadiène-styrène éventuellement hydrogéné ont une teneur en styrène comprise dans un domaine allant de 10 à 60%.

6. Pneumatique selon l'une quelconque des revendications 3 à 5, dans lequel le ou les blocs élastomères de type copolymère statistique butadiène-styrène éventuellement hydrogéné ont une teneur en liaisons -1,2 pour la partie butadiénique comprise dans un domaine allant de 4% à 75% molaire, et une teneur en liaisons -1,4 comprise dans un domaine allant de 20% à 96% molaire.

7. Pneumatique selon l'une quelconque des revendications 3 à 6, dans lequel le ou les blocs élastomères de type copolymère statistique butadiène-styrène éventuellement hydrogéné sont hydrogénés de telle manière qu'une proportion allant de 25 à 100 % molaire des doubles liaisons dans la portion butadiène est hydrogénée.

8. Pneumatique selon l'une quelconque des revendications 3 à 7, dans lequel le ou les blocs thermoplastiques du copolymère bloc TPE (H)SBR-PS sont choisis parmi les polystyrènes.

9. Pneumatique selon l'une quelconque des revendications précédentes, dans lequel l'élastomère diénique est choisi dans le groupe constitué par les élastomères diéniques essentiellement insaturés, et les mélanges de ces élastomères.

10. Pneumatique selon l'une quelconque des revendications précédentes, dans lequel le taux d'élastomère diénique est compris dans un domaine allant de 40 à 90 pce et le taux d'élastomère thermoplastique est compris dans un domaine allant de 10 à 60 pce.

11. Pneumatique selon l'une quelconque des revendications précédentes, dans lequel la quantité de peroxyde dans la composition est comprise dans un domaine allant de 0,1 à 10 pce.

12. Pneumatique selon l'une quelconque des revendications précédentes, dans lequel la composition de la bande de roulement comprend en outre de la charge renforçante, à un taux inférieur à 100 pce, de préférence inférieur à 60 pce.

13. Pneumatique selon la revendication 12, dans lequel la charge renforçante est du noir de carbone et/ou de la silice.

14. Pneumatique selon l'une quelconque des revendications précédentes, dans lequel la composition de la bande de roulement ne comprend pas de système plastifiant, ou en comprend avec un taux total de plastifiant inférieur à 20 pce, de préférence inférieur à 15 pce.

15. Pneumatique selon l'une quelconque des revendications 1 à 13, comprenant en outre une résine thermoplastique comprenant des motifs polyphénylène éther éventuellement substitués.

## Patentansprüche

1. Reifen, wobei mindestens dessen Lauffläche eine Zusammensetzung auf Basis von mindestens einem Dienelastomer in einem Gehalt zwischen 35 und 99 phe (Gewichtsteile pro hundert Teile Elastomer), ein thermoplastisches Elastomer vom Typ Copolymer mit einem Elastomerblock und einem thermoplastischen Block in einem Gehalt zwischen 1 und 65 phe und ein Vernetzungssystem auf Basis von organischem Peroxid umfasst.

2. Reifen nach Anspruch 1, wobei die zahlenmittlere Molmasse des thermoplastischen Elastomers zwischen 30.000 und 500.000 g/mol liegt.

3. Reifen nach einem der vorhergehenden Ansprüche, wobei das thermoplastische Elastomer aus der Gruppe bestehend aus Blockcopolymeren mit mindestens einem Elastomerblock vom Polyether-Typ und mindestens einem thermoplastischen Bock vom Nicht-Styrol-Typ, Blockcopolymeren mit mindestens einem Elastomerblock vom Typ gegebenenfalls hydriertes statistisches Butadien-Styrol-Copolymer und mindestens einem thermoplastischen Block vom Styrol-Typ ((H)SBR-PS TPE) und Mischungen dieser thermoplastischen Elastomere ausgewählt ist.

4. Reifen nach Anspruch 3, wobei das thermoplastische Elastomer aus der Gruppe bestehend aus Blockcopolymeren mit mindestens einem Elastomerblock vom Polyether-Typ und mindestens einem thermoplastischen Polyamidblock (PEBA), Blockcopolymeren mit mindestens einem Elastomerblock vom Polyether-Typ und mindestens einem thermoplastischen Polyesterblock (COPE), Blockcopolymeren mit mindestens einem Elastomerblock vom Typ gegebenenfalls hydriertes statistisches Butadien-Styrol-Copolymer und mindestens einem thermoplastischen Block vom Styrol-Typ ((H)SBR-PS TPE) und Mischungen dieser thermoplastischen Elastomere ausgewählt ist.

5. Reifen nach Anspruch 3 oder 4, wobei der Elastomerblock bzw. die Elastomerblöcke vom Typ gegebenenfalls hydriertes statistisches Butadien-Styrol-Copolymer einen Styrolgehalt in einem Bereich von 10 bis 60 % aufweist bzw. aufweisen.

6. Reifen nach einem der Ansprüche 3 bis 5, wobei der Elastomerblock bzw. die Elastomerblöcke vom Typ gegebenenfalls hydriertes statistisches Butadien-Styrol-Copolymer einen Gehalt an 1,2-Bindungen für den Butadien-Teil in einem Bereich von 4 bis 75 Mol-% und einen Gehalt an 1,4-Bindungen in einem Bereich von 20 bis 96 Mol-% aufweist bzw. aufweisen.

7. Reifen nach einem der Ansprüche 3 bis 6, wobei der Elastomerblock bzw. die Elastomerblöcke vom Typ gegebenenfalls hydriertes statistisches Butadien-Styrol-Copolymer derart hydriert ist bzw. sind, dass ein Anteil im Bereich von 25 bis 100 Mol-% der Doppelbindungen in dem Butadien-Teil hydriert ist.

8. Reifen nach einem der Ansprüche 3 bis 7, wobei der thermoplastische Block bzw. die thermoplastischen Blöcke des (H)SBR-PS-TPE-Blockcopolymers aus Polystyrolen ausgewählt ist bzw. sind.

9. Reifen nach einem der vorhergehenden Ansprüche, wobei das Dienelastomer aus der Gruppe bestehend aus im Wesentlichen ungesättigten Dienelastomeren und Mischungen dieser Elastomere ausgewählt ist.

10. Reifen nach einem der vorhergehenden Ansprüche, wobei der Gehalt an Dienelastomer in einem Bereich von 40 bis 90 phe liegt und der Gehalt an thermoplastischem Elastomer in einem Bereich von 10 bis 60 phe liegt.

11. Reifen nach einem der vorhergehenden Ansprüche, wobei die Peroxidmenge in der Zusammensetzung in einem Bereich von 0,1 bis 10 phe liegt.

12. Reifen nach einem der vorhergehenden Ansprüche, wobei die Zusammensetzung der Lauffläche außerdem einen verstärkenden Füllstoff in einem Gehalt von weniger als 100 phe, vorzugsweise weniger als 60 phe, umfasst.

13. Reifen nach Anspruch 12, wobei es sich bei dem verstärkenden Füllstoff um Ruß und/oder Kieselsäure handelt.

14. Reifen nach einem der vorhergehenden Ansprüche, wobei die Zusammensetzung der Lauffläche kein Weichmachersystem umfasst oder ein Weichmachersystem mit einem gesamten Weichmachergehalt von weniger als 20 phe, vorzugsweise weniger als 15 phe, aufweist.

15. Reifen nach einem der Ansprüche 1 bis 13, außerdem umfassend ein thermoplastisches Harz, das gegebenenfalls substituierte Polyphenylenether-Einheiten umfasst.

## Claims

1. Tyre, at least the tread of which comprises a composition based on at least a diene elastomer, at a content of between 35 and 99 phr (parts by weight per hundred parts of elastomer), a thermoplastic elastomer of elastomer block and thermoplastic block copolymer type, at a content of between 1 and 65 phr, and a crosslinking system based on an organic peroxide.

2. Tyre according to Claim 1, wherein the number-average molecular weight of the thermoplastic elastomer is between 30 000 and 500 000 g/mol.

3. Tyre according to one of the preceding claims, wherein the thermoplastic elastomer is selected from the group consisting of block copolymers comprising at least one elastomer block of polyether type and at least one thermoplastic block of non-styrene type, block copolymers comprising at least one elastomer block of optionally hydrogenated random butadiene/styrene copolymer type and at least one thermoplastic block of styrene type ((H)SBR-PS TPE), and the mixtures of these thermoplastic elastomers.

4. Tyre according to Claim, 3, wherein the thermoplastic elastomer is selected from the group consisting of block copolymers comprising at least one elastomer block of polyether type and at least one polyamide thermoplastic block (PEBA), block copolymers comprising at least one elastomer block of polyether type and at least one polyester thermoplastic block (COPE), block copolymers comprising at least one elastomer block of optionally hydrogenated random butadiene/styrene copolymer type and at least one thermoplastic block of styrene type ((H)SBR-PS TPE), and the mixtures of these thermoplastic elastomers.

5. Tyre according to either Claims 3 or 4, wherein the elastomer block or blocks of optionally hydrogenated random butadiene/styrene copolymer type have a styrene content within a range extending from 10% to 60%.

6. Tyre according to any one of Claims 3 to 5, wherein the elastomer block or blocks of optionally hydrogenated random butadiene/styrene copolymer type have a content of 1,2-bonds for the butadiene part within a range extending from 4 mol% to 75 mol% and a content of 1,4- bonds within a range extending from 20 mol% to 96 mol%.

7. Tyre according to any one of Claims 3 to 6, wherein the elastomer block or blocks of optionally hydrogenated random butadiene/styrene copolymer type are hydrogenated in such a way that a proportion ranging from 25 mol% to 100 mol% of the double bonds in the butadiene portion is hydrogenated.

8. Tyre according to any one of Claims 3 to 7, wherein the thermoplastic block or blocks of the (H)SBR-PS TPE block copolymer are chosen from polystyrenes.

9. Tyre according to any one of the preceding claims, wherein the diene elastomer is selected from the group consisting of essentially unsaturated diene elastomers and the mixtures of these elastomers.

10. Tyre according to any one of the preceding claims, wherein the content of diene elastomer is within a range extending from 40 to 90 phr and the content of thermoplastic elastomer is within a range extending from 10 to 60 phr.

11. Tyre according to any one of the preceding claims, wherein the amount of peroxide in the composition is within a range extending from 0.1 to 10 phr.

12. Tyre according to any one of the preceding claims, wherein the composition of the tread additionally comprises reinforcing filler at a content of less than 100 phr, preferably of less than 60 phr.

13. Tyre according to Claims 12, wherein the reinforcing filler is carbon black and/or silica.

14. Tyre according to any one of the preceding claims, wherein the composition of the tread does not comprise a plasticizing system or comprises it with a total plasticizer content of less than 20 phr, preferably of less than 15 phr.

15. Tyre according to any one of Claims 1 to 13, additionally comprising a thermoplastic resin comprising optionally substituted polyphenylene ether units.
